# EUROPÄISCHE PATENTSCHRIFT

(11) **EP 4 058 300 B1**
(45) Veröffentlichungstag und Bekanntmachung des Hinweises auf die Patenterteilung: **06.03.2024**
(21) Anmeldenummer: 20781485.6
(22) Anmeldetag: 28.09.2020
(51) Int. Cl.: B60B 3/02, B60B 3/06, B60B 3/08, B60B 3/12, B60B 21/02

(54) **SCHEIBENRAD FÜR EIN KRAFTFAHRZEUG SOWIE VERFAHREN ZUR HERSTELLUNG EINES SOLCHEN SCHEIBENRADES**
DISK WHEEL FOR A MOTOR VEHICLE AND METHOD FOR PRODUCING A DISK WHEEL OF THIS TYPE
ROUE À DISQUE POUR VÉHICULE À MOTEUR ET PROCÉDÉ DE PRODUCTION D'UNE ROUE À DISQUE DE CE TYPE

(30) Priorität: 13.11.2019 DE 102019130608
(43) Veröffentlichungstag der Anmeldung: 21.09.2022
(73) Patentinhaber: Bayerische Motoren Werke Aktiengesellschaft, 80809 München (DE)
(72) Erfinder: FASCHINGER, Florian, 85748 Garching (DE); ADAM, Andreas, 80999 München (DE)
(86) Internationale Anmeldenummer: PCT/EP2020/077043
(87) Internationale Veröffentlichungsnummer: WO 2021/094028

(56) Entgegenhaltungen:
- EP-A1- 0 065 086
- EP-A1- 1 780 048
- WO-A1-2019/201510
- JP-U- S53 122 802
- US-A- 2 048 442

## Beschreibung

Die Erfindung betrifft ein Scheibenrad für ein insbesondere einspuriges Kraftfahrzeug, wie beispielsweise ein Motorrad, sowie ein Verfahren zur Herstellung eines solchen Scheibenrades.

Im Stand der Technik sind bereits eine Vielzahl von Rädern und auch Scheibenräder für Kraftfahrzeuge sowie für einspurige Kraftfahrzeuge bekannt.

Grundsätzlich haben Scheibenräder eine zwischen der Radnabe und der Radfelge im Wesentlichen geschlossene Fläche und keine Speichen oder Streben mit dazwischen liegenden Öffnungen. Durch die geschlossenen Flächen werden bei Scheibenrädern Luftverwirbelungen reduziert, so dass sie sich positiv auf die Aerodynamik des Fahrzeugs auswirken.

Bei einspurigen Kraftfahrzeugen kommt hinzu, dass die Scheibenräder im Wesentlichen symmetrisch zu einer zu der Rotationsachse der Scheibenräder orthogonal liegenden Symmetrieebene ausgebildet sein sollen, um einem Betrachter von beiden möglichen Betrachtungsseiten ein im Wesentlichen identisches und somit ansprechendes Erscheinungsbild zu bieten und zugleich auf beiden Seiten des Scheibenrades im Wesentlichen identische aerodynamische Eigenschaften bereitzustellen.

Hierfür ist im Stand der Technik bereits bekannt, Bleche oder andere Materialien vorzusehen, welche jeweils eine geschlossene Fläche zu einer der Seiten des Scheibenrades bereitstellen und sich von der Radfelge zu der Radnabe erstrecken. Um eine ausreichende Stabilität des Scheibenrades zu gewährleisten, werden vergleichsweise dicke Bleche bzw. Materialien gewählt, wodurch sich ein hohes und daher nachteiliges Gewicht der im Stand der Technik bekannten Scheibenräder ergibt.

Weiter ist beispielsweise aus der EP 0 065 086 A1 bekannt, den Hohlraum zwischen zwei Radscheiben eines Scheibenrades mit Leichtbaumaterialien zu füllen. Die WO 2019/201510 A1 lehrt zudem ein einstückiges Rad, bei welchem in einem Hohlraum Verstärkungsrippen vorgesehen sein können.

Der Erfindung liegt deshalb die Aufgabe zugrunde, die vorgenannten Nachteile zu überwinden und ein stabiles und leichtes Scheibenrad sowie ein zugehöriges Herstellungsverfahren bereitzustellen.

Diese Aufgabe wird durch die Merkmalskombination gemäß Patentanspruch 1 gelöst.

Erfindungsgemäß wird ein Scheibenrad für ein Kraftfahrzeug gemäß Anspruch 1 vorgeschlagen, bei welchem es sich vorzugsweise um ein einspuriges Kraftfahrzeug, wie ein Motorrad oder ein Roller, handelt, wobei das Scheibenrad weiter vorzugsweise das Vorderrad des einspurigen Kraftfahrzeugs ist. Das Scheibenrad umfasst eine konzentrisch zu einer Rotationsachse des Scheibenrades angeordnete Radnabe zur Montage des Scheibenrades am Kraftfahrzeug, eine dazu ebenfalls konzentrische Radfelge, welche insbesondere der Aufnahme des Reifens dient und ringförmig um die Nabe verläuft, und eine erste Radscheibe und eine zweite Radscheibe. Die erste Radscheibe und die zweite Radscheibe erstrecken sich jeweils von der Radfelge in Richtung der Radnabe, wobei die Radscheiben an der Radnabe in eine zu der Rotationsachse des Scheibenrades parallelen Querrichtung zueinander beabstandet sind und zu der Radnabe hin aufeinander zulaufen, wodurch zwischen den Radscheiben vorzugsweise ein im Querschnitt v-förmiger Hohlraum ausgebildet ist. Um bei einer möglichst geringen Dicke der Radscheiben und einer damit einhergehenden Materialeinsparung die Stabilität des Scheibenrades zu gewährleisten, ist vorgesehen, dass das Scheibenrad erfindungsgemäß ferner zumindest zwei Verstärkungsrippen umfasst, welche sich von der ersten Radscheibe zu der zweiten Radscheibe erstrecken und diese miteinander verbinden. Die Verstärkungsrippen sind gleichmäßig um die Rotationsachse des Scheibenrades verteilt angeordnet.

Durch die Verstärkungsrippen und durch die gleichmäßige Verteilung um die Rotationsachse der Verstärkungsrippen wird das Scheibenrad bzw. werden die erste und die zweite Radscheibe in im Wesentlichen gleichmäßig große Kreissektoren untergliedert. Die Verstärkungsrippen erstrecken sich vorzugsweise durchgehend von der Radfelge entlang der Abschnitte der Scheibenräder, in welchen die Scheibenräder voneinander beabstandet sind, bis zu einem Abschnitt der Scheibenräder, in welchem diese unmittelbar aneinander anliegen bzw. miteinander verbunden sind.

Das Grundprinzip der Erfindung ist es, dass das Rad im Sichtbereich zu seinen Seiten hin durch die Radscheiben geschlossen und entsprechend als Scheibenrad ausgebildet ist, wobei die Radscheiben zusammen mit der vorzugsweise aus zwei Abschnitten gebildeten Felge durch die Verstärkungsrippen versteift werden. Der Sichtbereich entspricht einem nach radial innen an die Radfelge angrenzenden Abschnitt, da ein nach radial außen unmittelbar an die Radnabe angrenzender Bereich bei einem an dem Kraftfahrzeug montiertem Rad von weiteren Komponenten des Kraftfahrzeugs verdeckt wird. Dabei können die Verstärkungsrippen zugleich zur Integration weiterer Funktionselemente bzw. Funktionen dienen. Die Verstärkungsrippen sind durch ihre gleichmäßige Verteilung um die Rotationsachse zudem integral als Fluchtgewichte nutzbar, deren Gewicht bei einem Auswuchten bis zu einem vorbestimmten Maß reduziert und das Scheibenrad dadurch ausgewuchtet werden kann, so dass keine oder zumindest geringere zusätzlichen Gewichte zur Auswuchtung des Rades an diesem angeordnet werden müssen.

Gegenüber im Stand der Technik bekannten Scheibenrädern mit Radscheiben kann die Dicke der Radscheiben und dadurch das Gewicht des Scheibenrades deutlich reduziert werden. Beispielsweise ist es durch das vorsehen von Verstärkungsrippen möglich, ansonsten mindestens 2,5 mm dicke Radscheiben mit einer reduzierten Dicke von 2 mm auszubilden.

Bei der Ausbildung des Scheibenrades durch einen Niederdruck-Kokillenguss weisen die Radscheiben vor einer später erläuterten Nachbearbeitung bzw. die Radscheiben eines ebenfalls später erläuterten Rohkörpers eine Wandstärke zwischen 4 und 6 mm und vorzugsweise eine Wandstärke von 5 mm auf.

Wird bei der Herstellung des Scheibenrades ein Sandkern bzw. mehrere Sandkerne verwendet, welche auch für die Herstellung des Speichenkorbs bzw. -käfigs notwendig sein können und an den Außenseiten der Radscheiben angeordnet werden können, sind bei dem Gießverfahren Wandstärken zwischen 3 und 4 mm und vorzugsweise 3,5 mm der Radscheiben realisierbar.

Diese Wandstärke der Radscheiben kann durch eine spanende Nachbearbeitung weiter reduziert werden.

Die Verstärkungsrippen können an ihrer zu der Radfelge weisenden Seite eine gerade aber alternativ auch konkave oder konvexe Form aufweisen. Insbesondere eine konkave Form ist hierbei vorteilhaft, da durch jede Verstärkungsrippe Abschnitte gebildet werden, welche sich als ein Spant entlang der beiden Radscheiben erstrecken, so dass der zwischen den Spanten einer Verstärkungsrippe liegende Bereich frei bleibt und Material eingespart wird.

Um im Sichtbereich bzw. angrenzend an die Radfelge eine geschlossene Fläche bereitzustellen und dadurch ein Scheibenrad zu bilden, ist bei einer vorteilhaften Weiterbildung der Erfindung vorgesehen, dass die erste und die zweite Radscheibe jeweils eine in Umfangsrichtung um die Rotationsachse vollständig geschlossene Fläche ausbilden.

Ferner ist hierbei bei einer Weiterbildung vorteilhaft, dass sich die erste und die zweite Radscheibe von der Radfelge zumindest über ein Viertel der Strecke in Radialrichtung zwischen Radfelge und Radnabe und weiter vorzugsweise über die Hälfte der Strecke zu der Radnabe erstrecken und jeweils die geschlossene Fläche ausbilden.

In einem an die Radnabe angrenzenden und in Radialrichtung zwischen den Radscheiben und der Radnabe liegenden Bereich können zur Gewichtseinsparung freie Bereiche vorgesehen sein.

Ist an dem Scheibenrad eine Bremsscheibe vorgesehen, ist insbesondere vorteilhaft, wenn sich die erste und die zweite Radscheibe von der Radfelge zumindest bis auf Höhe eines Außenumfangs der Bremsscheibe zu der Radnabe erstrecken und ein von den Radscheiben frei bleibender Bereich, welcher an die Radnabe angrenzt, von den Bremsscheiben verdeckt wird. Dabei entspricht die ringförmige Fläche an jeweils einer Seite des Rades, welche sich von dem Außenumfang der Bremsscheiben zu der Radfelge erstreckt dem Sichtbereich, da der hinter der Bremsscheibe liegende Bereich von dieser abgedeckt wird und somit im Wesentlichen nicht sichtbar ist.

Vorzugsweise sieht eine Ausbildungsform des Scheibenrades vor, dass die Radfelge zwei voneinander getrennte Abschnitte aufweist. Die zwei voneinander getrennten Abschnitte, welches vorzugsweise jeweils zur Aufnahme einer abschließenden Wulst des Reifens dienen, liegen einander bezogen auf eine zu der Rotationsachse orthogonalen Symmetrieebene des Scheibenrades spiegelbildlich gegenüber. Die beiden getrennten Abschnitte sind durch die Radscheiben miteinander verbunden.

Besonders vorteilhaft ist eine Variante der Erfindung, bei welcher zumindest eine Verstärkungsrippe einen zu der Radfelge offenen Hohlraum ausbildet. Der Hohlraum ist dadurch, dass er zu der Radfelge hin geöffnet ist, zugleich auch strömungstechnisch mit einem auf die Radfelge aufgezogenen Reifen bzw. dessen Innenraum verbunden, so dass in dem Hohlraum der Innendruck des Reifens herrscht.

Bei einer Weiterbildung ist daher vorgesehen, dass in dem Hohlraum ein Sensor, wie beispielsweise ein Reifendrucksensor angeordnet werden kann bzw. angeordnet ist. Zusätzlich oder alternativ dazu ist in einer der beiden Radscheiben eine zu dem Hohlraum der Verstärkungsrippe führende und somit strömungstechnisch mit dem Hohlraum verbundene Öffnung vorgesehen, in welcher ein Sensor, wie beispielsweise ein Reifendrucksensor und/oder ein Ventil aufgenommen werden kann oder aufgenommen ist. Durch den Hohlraum bzw. durch die zu dem Hohlraum führende Öffnung in einer der Radscheiben, kann daher ein Sensor und/oder ein Ventil als Funktionselement in das Scheibenrad integriert werden.

Ein solcher Hohlraum kann in einer oder in mehreren Verstärkungsrippe vorgesehen werden, wobei eine einen Hohlraum aufweisende Verstärkungsrippe vorzugsweise in Umfangsrichtung des Scheibenrades dicker ausgebildet ist als umliegende Verstärkungsrippen, wodurch Maßnahmen zum Ausgleich einer Unwucht vorgesehen nötig sein können. Die Unwucht, welche sowohl durch die den Hohlraum aufweisenden Verstärkungsrippe selbst, aber auch durch einen zugehörigen Sensor oder ein zugehöriges Ventil entstehen können, kann beispielsweise durch eine oder mehrere bezogen auf die Rotationsachse gegenüberliegende Verstärkungsrippen bzw. die für die gegenüberliegenden Verstärkungsrippen verwendete Materialmenge ausgeglichen werden. Ist eine gerade Anzahl von Verstärkungsrippen vorgesehen, kann also die für die Verstärkungsrippe, welcher der den Hohlraum aufweisenden Verstärkungsrippe gegenüberliegt, mehr Material vorgesehen sein. Ist eine ungerade Anzahl von Verstärkungsrippen vorgesehen, kann die Unwucht durch das Material ausgeglichen werden, welches für die beiden benachbarten Verstärkungsrippen genutzt wird, welche einer der Verstärkungsrippe mit dem Hohlraum unmittelbar gegenüberliegenden Position am nächsten kommen.

Da es bei der Herstellung des Scheibenrades dazu kommen kann, dass eine ungleichmäßige Materialverteilung oder aber auch zusätzliche Gewichte, wie beispielsweise durch Sensoren oder Ventile, zu einer Unwucht an dem Scheibenrad führt, welche ansonsten durch zusätzliche Gewichte ausgeglichen werden müsste, ist bei einer vorteilhaften Variante des Scheibenrades vorgesehen, dass an einer zu der Radfelge weisenden Seite zumindest eines Teils der Verstärkungsrippen und/oder in Umfangsrichtung des Scheibenrades zumindest des Teils der Verstärkungsrippen ein Materialüberschuss zur Auswuchtung des Scheibenrades vorgesehen ist. Der Materialüberschuss kann dann vollständig oder zumindest teilweise bei einer Bearbeitung im Rahmen der Herstellung des Scheibenrades entfernt und das Scheibenrad mit oder ohne daran vorgesehenen Sensoren und/oder Ventilen ausgewuchtet werden. Darüber hinaus zeichnet sich der Materialüberschuss vorzugsweise dadurch aus, dass er vollständig entfernt werden kann, ohne eine vorbestimmte Belastbarkeit bzw. Stabilität der Verstärkungsrippe und dadurch des gesamten Scheibenrades zu beeinflussen.

Vorzugsweise ist das Scheibenrad einstückig ausgebildet. Insbesondere sind die Wesentlichen Komponenten des Scheibenrades, also die Radfelge, die Radscheiben, die Verstärkungsrippe und die Radnabe sowie eventuell vorgesehene Speichen einstückig miteinander ausgebildet und stoffschlüssig verbunden. Sensoren und/oder Ventile, welche bei Varianten des Scheibenrades vorgesehen sind, können beispielsweise durch ein Gewinde in die Verstärkungsrippen eingeschraubt sein.

Als Materialien für das Scheibenrad bzw. für die einstückig miteinander ausgebildeten Komponenten kommen insbesondere Aluminiumgusslegierungen, Stahl aber auch faserverstärkte Materialien mit duroplastischer oder thermoplastischer Matrix in Frage. Entsprechend kann das Scheibenrad durch ein Gussverfahren, durch ein Stahl-Schweißverfahren oder durch Verfahren zur Herstellung von Faserverbundbauteilen hergestellt werden. Als Gussverfahren kann insbesondere ein Rotations-Kokillenguss verwendet werden.

In einer ersten Variante erstrecken sich die Radscheiben von der Radfelge bis zu der Radnabe, wobei die Radscheiben hierbei angrenzend an die Radnabe einen gemeinsamen Abschnitt aufweisen können, in welchen die erste und zweite Radscheibe unmittelbar miteinander verbunden sind und in diesem Abschnitt als eine gemeinsame Scheibe zu der Radnabe verlaufen.

Bei einer dazu alternativen Variante, bei welcher zusätzlich Gewicht eingespart werden kann, ist vorgesehen, dass das Scheibenrad ferner zumindest zwei Speichen umfasst, welche sich jeweils von der ersten Radscheibe und der zweiten Radscheibe bzw. von einem zu der Radnabe weisenden Randabschnitt der ersten und zweiten Radscheibe zu der Radnabe erstrecken und diese miteinander verbinden. Zwischen den Speichen kann hierbei ein von jeglichen Material freier Freiraum ausgebildet sein, durch welchen das Gewicht des Scheibenrades weiter reduziert wird.

Ein Abschnitt der ersten und der zweiten Radscheibe bzw. eine gemeinsame Verlängerung der ersten und der zweiten Radscheibe kann sich zudem auch entlang der Speichen weiter in Richtung der Radnabe erstrecken.

Sind an dem Scheibenrad Speichen vorgesehen, ist eine Ausführungsform vorteilhaft, bei welcher die Speichen ebenfalls gleichmäßig um die Rotationsachse des Scheibenrades verteilt angeordnet sind.

Von Vorteil ist zudem, wenn die Anzahl der Speichen der Anzahl der Verstärkungsrippen entspricht und die zwischen den Radscheiben angeordneten Verstärkungsrippen in die Speichen übergehen. Die Verstärkungsrippen können dadurch auch als innenliegende Speichen und die Speichen als außenliegende Speichen bezeichnet werden, wobei die außenliegenden Speichen eines mit einem Reifen versehenen Scheibenrades vorzugsweise von weiteren Komponenten des Kraftfahrzeugs, wie Bremsscheiben bzw. der gesamten Bremsanlage, verdeckt werden.

Um in dem Bereich um die Radnabe zugleich einen möglichst leichten Aufbau des Scheibenrades als auch das Anbringen weiterer Funktionselemente an dem Scheibenrad zu ermöglichen, verlaufen bei einer ebenfalls vorteilhaften Ausgestaltung der Erfindung die Speichen jeweils in einem ersten Abschnitt in einer zu der Rotationsachse orthogonalen Symmetrieebene des Scheibenrades und in einem zweiten Abschnitt versetzt zu der Symmetrieebene oder alternativ schräg zu dieser. An dem versetzt zu der Symmetrieebene verlaufenden Abschnitten der Speichen können die Funktionselemente fixiert werden, wobei die zweiten Abschnitte vorzugsweise an eine Ebene angrenzen, welche die Breite des Scheibenrades in Querrichtung bestimmt.

Zudem ist bei einer Weiterbildung der Erfindung vorgesehen, dass das Scheibenrad ferner zumindest eine Gruppe von kranzförmig um die Radnabe angeordneten Befestigungselementen zur Fixierung eines Funktionselements an dem Scheibenrad aufweist. Bei einem durch eine Gruppe von Befestigungselementen fixierten Funktionselement kann es sich beispielsweise um eine Bremsscheibe oder eine Sensorscheibe handeln. Vorzugsweise sind an dem Scheibenrad zwei einander bezüglich der Symmetrieebene des Scheibenrades gegenüberliegende Gruppen von Befestigungselementen vorgesehen, an welchen jeweils eine Bremsscheibe befestigt werden kann. Weiter vorzugsweise ist eine dritte Gruppe vorgesehen, welche insbesondere unmittelbar an die Radnabe angrenzend ausgebildet ist und an welcher eine Sensorscheibe fixiert werden kann. Die Befestigungselemente sind weiter vorzugsweise als ein Gewinde aufweisende Öffnungen ausgebildet, welche in den Speichen und insbesondere an einem Übergang zwischen dem ersten und zweiten Abschnitt der Speichen vorgesehen sind.

Ferner können zueinander unmittelbar benachbarte Speichen durch Querstreben verbunden sein, wobei die Querstreben vorzugsweise an einem Übergang des ersten Abschnitts zu dem zweiten Abschnitt einer Speiche vorgesehen sind, welche weiter vorzugsweise versetzt zu der Symmetrieebene in der Ebene der zweiten Abschnitte liegen. Durch die zweiten Abschnitte der Speichen und die zwischen diesen verlaufenden Querstreben ist um die Radnabe ein Speichenkorb oder Käfig ausgebildet, an dessen Knotenpunkten vorzugsweise Befestigungselemente zur Fixierung der Funktionselemente an dem Scheibenrad vorgesehen sein können.

Sollen Speichen mit in Querrichtung voneinander beabstandeten Abschnitten und/oder die Speichen verbindende Querstreben vorgesehen werden, wird bei der Herstellung vorzugsweise zusätzlich ein Sandkern verwendet, welcher die Form der Speichen und Querstreben bestimmt und zwischen diesen und der Nabe angeordnet ist. Der Sandkern kann später ausgewaschen werden.

Ein weiterer Aspekt der Erfindung betrifft ein Verfahren zur Herstellung eines erfindungsgemäßen Scheibenrades. Bei dem vorgeschlagenen Verfahren wird das Scheibenrad einstückig aus einem Gusswerkstoff und insbesondere aus einer Aluminiumlegierung gebildet. Zunächst wird bei der Herstellung des Scheibenrads ein im Wesentlichen dem Scheibenrad entsprechender Rohkörper des Scheibenrades in einer zumindest zwei Schieber umfassenden Gussform gegossen. Der Rohkörper unterscheidet sich vorzugsweise nur dadurch von dem fertigen Scheibenrad, dass an den Randbereichen des Scheibenrades zumindest abschnittsweise ein Materialüberschuss bzw. ein Übermaß vorgesehen ist, der bzw. das zur Verbesserung der Oberflächengüte und zur Reduzierung der Fertigungstoleranz entfernt werden kann. Die Schieber sind bei der Gussform gleichmäßig um die Rotationsachse des herzustellenden Scheibenrades verteilt angeordnet, wobei ein Zwischenraum zwischen jeweils zwei unmittelbar benachbarten Schiebern jeweils eine Verstärkungsrippe des herzustellenden Scheibenrades bestimmt. Nach dem Gießen bzw. dem Herstellen des Rohkörpers wird der Rohkörper aus der Gussform entformt, wobei die Schieber bei dem Entformen nach radial außen verschoben werden, wodurch ein einfaches Entformen ermöglicht wird. Nach dem Entformen wird zumindest in einem Abschnitt des Rohkörpers, welcher den Radscheiben entspricht, eine außenliegende Schicht des Rohkörpers zur Verbesserung der Oberflächengüte entfernt. Das Entfernen der außenliegenden Schicht kann beispielsweise durch Drehen oder Fräßen oder ein anderes spanendes Verfahren realisiert werden, wobei zur Herstellung planer Auflageflächen auch weitere Abschnitte des Rohkörpers nachbearbeitet werden können.

Eine Weiterbildung des Verfahrens sieht zudem vor, dass Material an den Verstärkungsrippen zur Auswuchtung des Scheibenrades entfernt wird. Das Entfernen des Materials an den Verstärkungsrippen kann ebenfalls durch Drehen, Fräßen oder andere spanende Verfahren, wie auch Bohren, umgesetzt werden. Durch das entfernte Material wird eine in Umfangsrichtung gleichmäßige Materialverteilung hergestellt, wobei nach einem Aufziehen eines Reifen auf das Scheibenrad ein weiteres Auswuchten nötig werden kann, durch welches dann jedoch eine geringere Unwucht reduziert werden muss.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines Scheibenrades;
- Fig. 2: eine Aufsicht auf eine erste Seite des Scheibenrades;
- Fig. 3: eine Aufsicht auf eine der ersten Seite gegenüberliegenden zweiten Seite des Scheibenrades;
- Fig. 4: eine Frontansicht des Scheibenrades;
- Fig. 5: eine erste Schnittansicht durch das Scheibenrad;
- Fig. 6: eine zweite Schnittansicht durch das Scheibenrad.

Die Figuren sind beispielhaft schematisch und zeigen eine mögliche Ausführungsform eines erfindungsgemäßen Scheibenrades. Gleiche Bezugszeichen in den Figuren weisen auf gleiche funktionale und/oder strukturelle Merkmale hin. Da in allen Figuren eine mögliche Ausführungsform dargestellt ist, bezieht sich die nachfolgende Figurenbeschreibung zugleich auf alle Figuren.

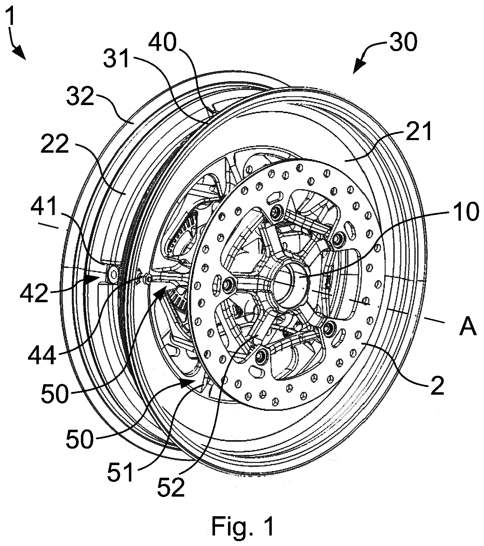

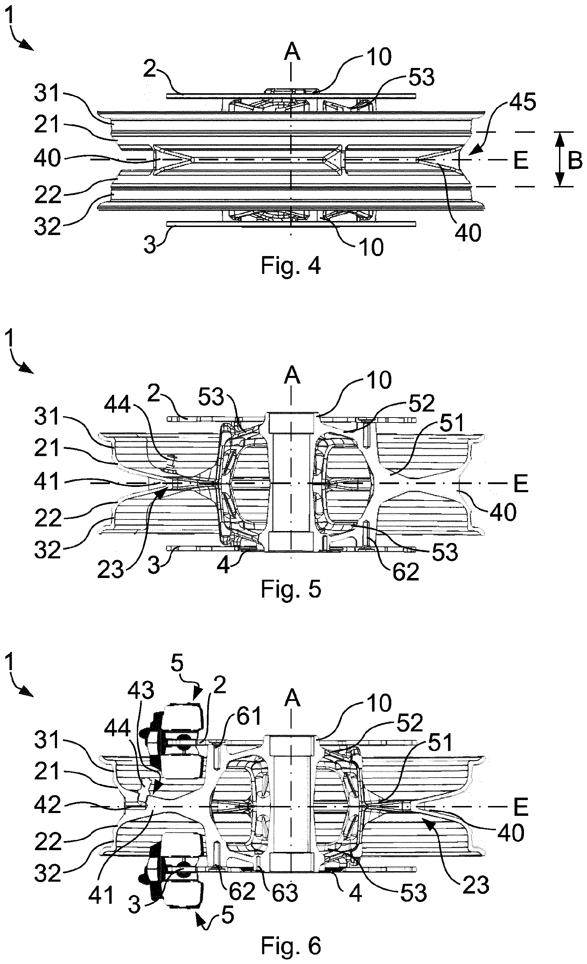

In Figur 1 ist das Scheibenrad 1 in einer perspektivischen bzw. isometrischen Darstellung abgebildet. Die Radfelge 30 besteht aus zwei voneinander getrennten Abschnitten 31, 32, welche in eine Breitenrichtung parallel zu der Rotationsachse A des Scheibenrades 1 zueinander beabstandet sind. Wie in Figur 1 aber auch insbesondere in den Figuren 4 bis 6 zu erkennen, sind die beiden Abschnitte 31, 32 über die Radscheiben 21, 22 und die Verstärkungsrippen 40, 41, welche zwischen den Radscheiben 21, 22 liegen, verbunden.

Die Radscheiben 21, 22 erstrecken sich von der Radfelge 30 bzw. jeweils von einem Abschnitt 31, 32 der Radfelge 30 in Radialrichtung R nach innen zu der Radnabe 10 hin. Dabei stellen die Radscheiben 21, 22 jeweils eine in Umfangsrichtung und entlang der Strecke zwischen Radfelge und Radnabe bis unter die an dem Scheibenrad 1 vorgesehenen Bremsscheiben 2, 3 vollständig geschlossene Fläche bereit, wodurch dem Betrachter zumindest in dem Bereich zwischen dem Außenumfang der Bremsscheiben 2, 3 und der Radfelge 30 die typische Erscheinung eines Scheibenrades geboten wird.

Der Bereich, der innerhalb des Außenumfangs der Bremsscheiben 2, 3 liegt, ist für den Betrachter bei einem an einem Kraftfahrzeug bzw. an einem Motorrad montierten erfindungsgemäßen Scheibenrad aufgrund der dort angeordneten Bremsanlage nicht sichtbar, so dass die gesamte Fläche zwischen Radnabe 10 und Radfelge 30 für den Betrachter geschlossen erscheint.

Die beiden Radscheiben 21, 22 laufen in Richtung der Radnabe 10 aufeinander zu, so dass sich ihr Abstand zueinander reduziert, desto geringer der Abstand zu der Rotationsachse A wird. Dabei bilden die Radscheiben 21, 22 einen insbesondere in Figuren 5 und 6 aufgrund der jeweiligen Schnittdarstellung besonders gut sichtbaren gemeinsamen Abschnitt 23 aus, in welchem sie miteinander verbunden sind und einen gemeinsamen Verlauf zu der Radnabe 10 hin aufweisen.

Zur Gewichtsreduktion ist ferner vorgesehen, dass sich die Radscheiben 21, 22 nicht bis zu der Radnabe 10 hin erstrecken, sondern in ihrem gemeinsamen Abschnitt 23 in Speichen 50 übergehen, welche sich von dem gemeinsamen Abschnitt 23 bis zu der Radnabe 10 erstrecken und die Radfelge 30 sowie die erste und zweite Radscheibe 21, 22 mit der Radnabe 10 verbinden.

Zur Versteifung der Radscheiben 21, 22 sind ferner in Umfangsrichtung um die Rotationsachse A in gleichmäßigen Abständen die Verstärkungsrippen 40, 41 vorgesehen, wobei bei dem beispielhaft gezeigten Scheibenrad 1 die Anzahl der Speichen 50 der Anzahl der Verstärkungsrippen 40, 41 entspricht und die Verstärkungsrippen 40, 41 dadurch in die Speichen 50 übergehen.

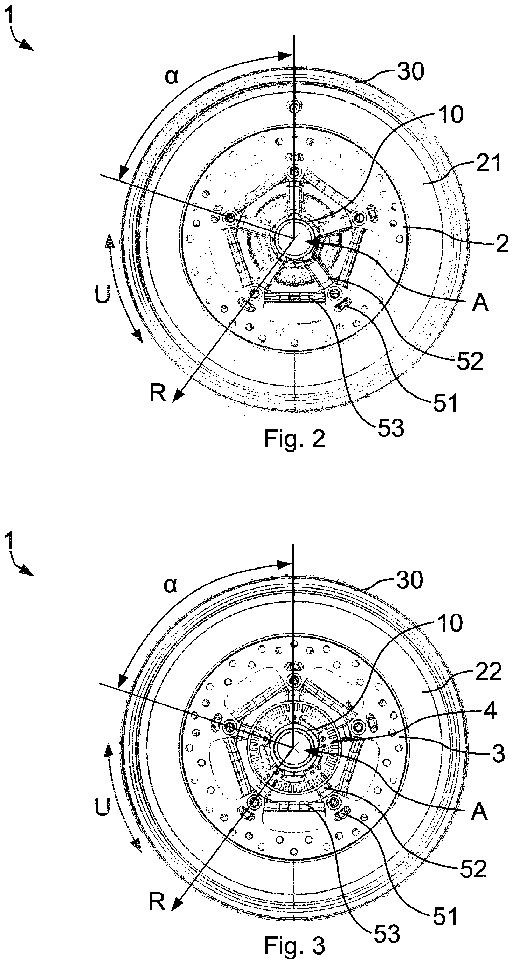

Die Figuren 2 und 3 zeigen jeweils eine Seitenansicht des Scheibenrades 1, wobei die Figur 2 einer ersten Seitenansicht auf eine erste Seite und die Figur 3 einer zweiten Seitenansicht auf eine zweite Seite entspricht, welche der ersten Seite gegenüberliegt. Die dargestellte Variante des Scheibenrades sieht fünf Speichen 50 und fünf Verstärkungsrippen 40, 41 vor, welche jeweils gleichmäßig um die Rotationsachse A verteilt werden, so dass zwischen jeweils zwei unmittelbar benachbarten Speichen 50 bzw. zwischen jeweils zwei unmittelbar benachbarten Verstärkungsrippen 40, 41 ein identischer Winkel α liegt und das Scheibenrad 1 bzw. die kreisförmige Grundform des Scheibenrades 1 in gleichmäßig große Kreissektoren geteilt ist.

Auf der ersten Seite des Scheibenrades 1 sind an den Speichen 50 über Befestigungselemente 61, 62, 63 eine erste Bremsscheibe 2 und auf der zweiten Seite des Scheibenrades 1 eine zweite Bremsscheibe 3 sowie eine in Radialrichtung R von der zweiten Bremsscheibe 3 umgebene ABS-Sensorscheibe 4 befestigt.

Die Speichen 50 sind jeweils in drei Abschnitte unterteilt. Ein erster Abschnitt 51 verläuft in einer Symmetrieebene E des Scheibenrades 1 und geht in zwei zweite Abschnitte 52 über, welche jeweils beabstandet und schräg zu der Symmetrieebene E verlaufen. Die beiden zweiten Abschnitte 52 liegen sich bezogen auf die Symmetrieebene E spiegelbildlich gegenüber. In dem jeweiligen Übergangsbereich von dem ersten Abschnitt 51 zu den beiden zweiten Abschnitten 52 sind die Befestigungselemente 61, 62 als Gewindebohrungen zur Fixierung der ersten und zweiten Bremsscheibe 2, 3 an dem Scheibenrad 1 ausgebildet. An den Übergangsabschnitten sind zudem zwischen jeweils zwei unmittelbar benachbarten Speichen 50 Querstreben 53 vorgesehen, welche die jeweils zweiten Abschnitte 52 in dem Übergangsbereich miteinander verbinden, wodurch die Speichen 50 mit den Querstreben 53 einen korb- oder käfigartigen Aufbau bereitstellen, welcher integral zur Fixierung weiterer Funktionselemente, also hier der Bremsscheiben 2, 3 genutzt werden kann und bei geringem Gewicht eine hohe Stabilität bietet.

Für die Fixierung der ABS-Sensorscheibe 4 sind an der zweiten Seite an den Speichen 50 unmittelbar angrenzend an die Radnabe 10 die Befestigungselemente 63 einer dritten Gruppe von Befestigungselementen vorgesehen.

Die Figuren 4 bis 6 zeigen jeweils eine Frontansicht des Scheibenrades 1, wobei das Scheibenrad 1 in den Figuren 5 und 6 entlang der Rotationsachse A geschnitten und in Figur 6 gegenüber der Figur 5 in Umfangsrichtung verdreht ist.

Wie in Figur 4 dargestellt, sind die Abschnitte 31, 32 der Radfelge 30 durch den Abstand B zueinander beabstandet, wobei die Abschnitte 31, 32 durch die Radscheiben 21, 22 miteinander verbunden sind. Dabei wird in dem an die Radfelge 30 in Radialrichtung R nach innen hin angrenzenden Bereich des Scheibenrades 1 ein von den Radscheiben 21, 22 begrenzter Hohlraum gebildet, welcher von den Verstärkungsrippen 40, 41 in Sektoren unterteilt wird. An der zu der Radfelge 30 weisenden Seite 45 der Verstärkungsrippen 40, 41 sind die Verstärkungsrippen 40, 41 konkav ausgebildet, wobei zum Auswuchten des Scheibenrades 1 an der zu der Radfelge 30 weisenden Seite 45 Material von den Verstärkungsrippen 40 abgetragen werden kann.

Der Schnitt in Figur 5 verläuft durch eine der einfachen Verstärkungsrippen 40, welche keinen Hohlraum 42 ausbilden.

Davon abweichend verläuft der Schnitt in Figur 6 durch eine Verstärkungsrippe 41, welche einen Hohlraum 42 vorsieht, der zu der Radfelge 30 hin geöffnet ist und strömungstechnisch mit einer Öffnung 43 in der Radscheibe 21 verbunden ist. Bei dem beispielhaft wiedergegebenen Scheibenrad 1 ist in die Öffnung 43 ein Ventil 44 eingeschraubt, welches über die Öffnung 43 und den Hohlraum 42 strömungstechnisch mit der Radfelge 30 bzw. einem darauf anordenbaren Reifen verbunden ist, so dass über das Ventil 44 der Reifendruck des Reifens verändert werden kann. Ferner sind in Figur 6 beidseitig an den Bremsschieben 3, 4 jeweils Bremsbacken 5 als Teil der Bremsanlage des Motorrades gezeigt.

## Patentansprüche

1. Scheibenrad (1) für ein Kraftfahrzeug,
wobei das Scheibenrad (1) eine konzentrisch zu einer Rotationsachse (A) des Scheibenrades (1) angeordnete Radnabe (10) zur Montage des Scheibenrades (1) an dem Kraftfahrzeug, eine dazu ebenfalls konzentrische Radfelge (30) und eine erste und eine zweite Radscheibe (21, 22) umfasst,
wobei die erste Radscheibe (21) und die zweite Radscheibe (22) sich jeweils von der Radfelge (30) in Richtung der Radnabe (10) erstrecken, an der Radnabe (10) in eine zu der Rotationsachse (A) des Scheibenrades (1) parallelen Querrichtung zueinander beabstandet sind und zu der Radnabe (10) hin aufeinander zulaufen,
**dadurch gekennzeichnet, dass** das Scheibenrad (1) ferner zumindest zwei Verstärkungsrippen (40, 41) umfasst, welche sich von der ersten Radscheibe (21) zu der zweiten Radscheibe (22) erstrecken und diese miteinander verbinden,
und wobei die Verstärkungsrippen (40, 41) gleichmäßig um die Rotationsachse (A) des Scheibenrades (1) verteilt angeordnet sind.

2. Scheibenrad nach Anspruch 1,
wobei die erste und die zweite Radscheibe (21, 22) jeweils eine in Umfangsrichtung (U) um die Rotationsachse (A) vollständig geschlossene Fläche ausbilden.

3. Scheibenrad nach Anspruch 2,
wobei sich die erste und die zweite Radscheibe (21, 22) von der Radfelge (30) zumindest über ein Viertel der Strecke in Radialrichtung (R) zwischen Radfelge (30) und Radnabe (10) zu der Radnabe (10) erstrecken und jeweils die vollständig geschlossene Fläche ausbilden.

4. Scheibenrad nach einem der vorhergehenden Ansprüche,
wobei die Radfelge (30) zwei voneinander getrennte Abschnitte (31, 32) aufweist, welche sich bezogen auf eine zu der Rotationsachse (A) orthogonalen Symmetrieebene (E) des Scheibenrades (1) spiegelbildlich gegenüberliegen und wobei die Abschnitte (31, 32) durch die Radscheiben (21, 22) miteinander verbunden sind.

5. Scheibenrad nach einem der vorhergehenden Ansprüche,
wobei zumindest eine Verstärkungsrippe (41) einen zu der Radfelge offenen Hohlraum (42) ausbildet.

6. Scheibenrad nach dem vorhergehenden Anspruch,
wobei in dem Hohlraum (42) ein Sensor angeordnet ist
und/oder in einer der beiden Radscheiben (21, 22) eine zu dem Hohlraum (42) der Verstärkungsrippe (41) führende Öffnung (43) vorgesehen ist, in welcher ein Sensor und/oder ein Ventil (44) aufgenommen ist.

7. Scheibenrad nach einem der vorhergehenden Ansprüche,
wobei an einer zu der Radfelge (30) weisenden Seite zumindest eines Teils der Verstärkungsrippen (40, 41) und/oder in eine Umfangsrichtung (U) um die Rotationsachse (A) zumindest des Teils der Verstärkungsrippen ein Materialüberschuss zur Auswuchtung des Scheibenrades (1) vorgesehen ist.

8. Scheibenrad nach einem der vorhergehenden Ansprüche,
wobei das Scheibenrad (1) einstückig ausgebildet ist.

9. Scheibenrad nach einem der vorhergehenden Ansprüche,
ferner umfassend zumindest zwei Speichen (50), welche sich jeweils von der ersten Radscheibe (21) und der zweiten Radscheibe (22) zu der Radnabe (10) erstrecken und diese miteinander verbinden.

10. Scheibenrad nach dem vorhergehenden Anspruch,
wobei die Speichen (50) gleichmäßig um die Rotationsachse (A) des Scheibenrades (1) verteilt angeordnet sind.

11. Scheibenrad nach einem der Ansprüche 9 oder 10,
wobei die Anzahl der Speichen (50) der Anzahl der Verstärkungsrippen (40, 41) entspricht und die zwischen den Radscheiben (21, 22) angeordneten Verstärkungsrippen (40, 41) in die Speichen (50) übergehen.

12. Scheibenrad nach einem der Ansprüche 9 bis 11,
wobei die Speichen (50) jeweils in einem ersten Abschnitt (51) in einer zu der Rotationsachse (A) orthogonalen Symmetrieebene (E) verlaufen und in einem zweiten Abschnitt (52) versetzt zu der Symmetrieebene (E) verlaufen.

13. Scheibenrad nach einem der vorhergehenden Ansprüche,
ferner aufweisend zumindest eine Gruppe von kranzförmig um die Radnabe angeordneten Befestigungselementen (61, 62, 63) zur Fixierung eines Funktionselements an dem Scheibenrad.

14. Verfahren zur Herstellung eines Scheibenrades nach einem der vorhergehenden Ansprüche,
wobei das Scheibenrad (1) einstückig aus einem Gusswerkstoff gebildet ist und bei der Herstellung des Scheibenrads zunächst ein im Wesentlichen dem Scheibenrad (1) entsprechender Rohkörper des Scheibenrades (1) in einer zumindest zwei Schieber aufweisenden Gussform gegossen wird,
wobei die Schieber gleichmäßig um die Rotationsachse (A) des herzustellenden Scheibenrades (1) verteilt angeordnet sind,
und ein Zwischenraum zwischen zwei Schiebern jeweils eine Verstärkungsrippe (40, 41) des herzustellenden Scheibenrades (1) bestimmt,
wobei der Rohkörper aus der Gussform entformt wird und die Schieber bei dem Entformen nach radial außen verschoben werden,
und wobei zumindest in einem Abschnitt des Rohkörpers, welcher den Radscheiben (21, 22) entspricht, eine außenliegende Schicht des Rohkörpers zur Verbesserung der Oberflächengüte entfernt wird.

15. Verfahren nach dem vorhergehenden Anspruch,
wobei Material an den Verstärkungsrippen (40, 41) zur Auswuchtung des Scheibenrades entfernt wird.

## Claims

1. Disk wheel (1) for a motor vehicle,
wherein the disk wheel (1) comprises a wheel hub (10), which is arranged concentrically with respect to an axis of rotation (A) of the disk wheel (1), for mounting the disk wheel (1) on the motor vehicle, a wheel rim (30) which is likewise concentric with respect to said wheel hub, and a first and a second wheel disk (21, 22),
wherein the first wheel disk (21) and the second wheel disk (22) each extend from the wheel rim (30) in the direction of the wheel hub (10), are spaced apart from one another on the wheel hub (10) in a transverse direction parallel to the axis of rotation (A) of the disk wheel (1) and converge with each other toward the wheel hub (10),
**characterized in that** the disk wheel (1) furthermore comprises at least two reinforcing ribs (40, 41) which extend from the first wheel disk (21) to the second wheel disk (22) and connect them to each other,
and wherein the reinforcing ribs (40, 41) are distributed uniformly about the axis of rotation (A) of the disk wheel (1).

2. Disk wheel according to Claim 1,
wherein the first and the second wheel disk (21, 22) each form a surface which is completely closed in the circumferential direction (U) about the axis of rotation (A).

3. Disk wheel according to Claim 2,
wherein the first and the second wheel disk (21, 22) extend from the wheel rim (30) to the wheel hub (10) at least over a quarter of the distance in the radial direction (R) between wheel rim (30) and wheel hub (10) and each form the completely closed surface.

4. Disk wheel according to one of the preceding claims,
wherein the wheel rim (30) has two sections (31, 32) which are separated from each other and lie opposite each other in mirror-inverted form with respect to a plane of symmetry (E), which is orthogonal to the axis of rotation (A), of the disk wheel (1), and wherein the sections (31, 32) are connected to each other by the wheel disks (21, 22).

5. Disk wheel according to one of the preceding claims,
wherein at least one reinforcing rib (41) forms a cavity (42) which is open to the wheel rim.

6. Disk wheel according to the preceding claim,
wherein a sensor is arranged in the cavity (42), and/or in one of the two wheel disks (21, 22) an opening (43) is provided which leads to the cavity (42) of the reinforcing rib (41) and in which a sensor and/or a valve (44) is accommodated.

7. Disk wheel according to one of the preceding claims,
wherein excess material for balancing the disk wheel (1) is provided on a side, facing the wheel rim (30), at least of a portion of the reinforcing ribs (40, 41) and/or in a circumferential direction (U) about the axis of rotation (A) at least of the portion of the reinforcing ribs.

8. Disk wheel according to one of the preceding claims,
wherein the disk wheel (1) is formed integrally.

9. Disk wheel according to one of the preceding claims,
furthermore comprising at least two spokes (50) which each extend from the first wheel disk (21) and the second wheel disk (22) to the wheel hub (10) and connect them to one another.

10. Disk wheel according to the preceding claim,
wherein the spokes (50) are distributed uniformly about the axis of rotation (A) of the disk wheel (1) .

11. Disk wheel according to either of Claims 9 and 10,
wherein the number of spokes (50) corresponds to the number of reinforcing ribs (40, 41), and the reinforcing ribs (40, 41) arranged between the wheel disks (21, 22) merge into the spokes (50).

12. Disk wheel according to one of Claims 9 to 11,
wherein the spokes (50) each run in a first section (51) in a plane of symmetry (E) orthogonal to the axis of rotation (A) and run offset with respect to the plane of symmetry (E) in a second section (52).

13. Disk wheel according to one of the preceding claims,
furthermore having at least one group of fastening elements (61, 62, 63), which are arranged annularly about the wheel hub, for fixing a functional element to the disk wheel.

14. Method for producing a disk wheel according to one of the preceding claims,
wherein the disk wheel (1) is formed integrally from a cast material and, during the production of the disk wheel, first of all a blank of the disk wheel (1) that substantially corresponds to the disk wheel (1) is cast in a casting die having at least two slides,
wherein the slides are distributed uniformly about the axis of rotation (A) of the disk wheel (1) to be produced,
and an intermediate space between two slides in each case defines a reinforcing rib (40, 41) of the disk wheel (1) to be produced,
wherein the blank is removed from the casting die, and, during the removal, the slides are displaced radially outward,
and wherein an outer layer of the blank is removed at least in a section of the blank corresponding to the wheel disks (21, 22) in order to improve the surface quality.

15. Method according to the preceding claim,
wherein material on the reinforcing ribs (40, 41) is removed in order to balance the disk wheel.

## Revendications

1. Roue à disque (1) destiné à véhicule automobile,
la roue à disque (1) comprenant un moyeu de roue (10) disposé concentriquement à un axe de rotation (A) de la roue à disque (1) et destiné au montage de la roue à disque (1) sur le véhicule automobile, une jante de roue (30) également concentrique audit axe de rotation et un premier et un deuxième disque de roue (21, 22),
le premier disque de roue (21) et le deuxième disque de roue (22) s'étendant chacun depuis la jante de roue (30) en direction du moyeu de roue (10), étant espacés l'un de l'autre sur le moyeu de roue (10) dans une direction transversale parallèle à l'axe de rotation (A) de la roue à disque (1) et convergeant en direction du moyeu de roue (10),
**caractérisée en ce que** la roue à disque (1) comprend en outre au moins deux nervures de renforcement (40, 41) qui s'étendent du premier disque de roue (21) au deuxième disque de roue (22) et les relient l'un à l'autre,
et les nervures de renforcement (40, 41) étant disposées de manière uniformément répartie autour de l'axe de rotation (A) de la roue à disque (1).

2. Roue à disque selon la revendication 1,
les premier et deuxième disques de roue (21, 22) formant chacun une surface complètement fermée dans la direction circonférentielle (U) autour de l'axe de rotation (A).

3. Roue à disque selon la revendication 2,
les premier et deuxième disques de roue (21, 22) s'étendant depuis la jante de roue (30) au moyeu de roue (10) au moins sur un quart de la distance dans la direction radiale (R) entre la jante de roue (30) et le moyeu de roue (10) et formant chacun la surface complètement fermée.

4. Roue à disque selon l'une des revendications précédentes,
la jante de roue (30) comportant deux portions distinctes (31, 32) qui se font face en miroir par rapport à un plan de symétrie (E) de la roue à disque (1) qui est orthogonal à l'axe de rotation (A) et les portions (31, 32) étant reliées l'une à l'autre par les disques de roue (21, 22).

5. Roue à disque selon l'une des revendications précédentes,
au moins une nervure de renforcement (41) formant une cavité (42) ouverte en direction de la jante.

6. Roue à disque selon la revendication précédente,
un capteur étant disposé dans la cavité (42)
et/ou une ouverture (43) étant prévue dans l'un des deux disques de roue (21, 22), laquelle mène à la cavité (42) de la nervure de renforcement (41) dans laquelle un capteur et/ou une valve (44) est logé(e).

7. Roue à disque selon l'une des revendications précédentes,
un excès de matière destinée à équilibrer la roue à disque (1) étant prévu sur un côté, dirigé vers la jante (30), d'au moins une partie des nervures de renforcement (40, 41) et/ou dans une direction circonférentielle (U) autour de l'axe de rotation (A) d'au moins une partie des nervures de renforcement.

8. Roue à disque selon l'une des revendications précédentes, la roue à disque (1) étant formée d'une seule pièce.

9. Roue à disque selon l'une des revendications précédentes,
comprenant en outre au moins deux rayons (50) qui s'étendent chacun depuis le premier disque de roue (21) et le deuxième disque de roue (22) jusqu'au moyeu de roue (10) et qui les relient l'un à l'autre.

10. Roue à disque selon la revendication précédente,
les rayons (50) étant disposés de manière uniformément répartie autour de l'axe de rotation (A) de la roue à disque (1).

11. Roue à disque selon l'une des revendications 9 ou 10,
le nombre de rayons (50) correspondant au nombre de nervures de renforcement (40, 41) et les nervures de renforcement (40, 41) disposées entre les disques de roue (21, 22) se transformant en les rayons (50).

12. Roue à disque selon l'une des revendications 9 à 11,
les rayons (50) s'étendant chacun dans un plan de symétrie (E) orthogonal à l'axe de rotation (A) dans une première portion (51) et s'étendant de manière décalée par rapport au plan de symétrie (E) dans une deuxième portion (52).

13. Roue à disque selon l'une des revendications précédentes,
comportant en outre au moins un groupe d'éléments de fixation (61, 62, 63) disposés en couronne autour du moyeu de roue et destinés à fixer un élément fonctionnel sur la roue à disque.

14. Procédé de réalisation d'une roue à disque selon l'une des revendications précédentes,
la roue à disque (1) étant formée d'une seule pièce à partir d'un matière coulée et, lors de la réalisation de la roue à disque, un corps brut de la roue à disque (1) qui correspond sensiblement à la roue à disque (1) étant d'abord coulé dans un moule de coulée comportant au moins deux coulisseaux,
les coulisseaux étant disposés de manière uniformément répartie autour de l'axe de rotation (A) de la roue à disque (1) à réaliser,
et un espace intermédiaire entre deux coulisseaux déterminant à chaque fois une nervure de renforcement (40, 41) de la roue disque (1) à réaliser,
le corps brut étant retiré du moule et les coulisseaux étant déplacés radialement vers l'extérieur pendant le retrait,
et, au moins dans une portion du corps brut qui correspond aux disques de roue (21, 22), une couche extérieure du corps brut étant retirée afin d'améliorer la qualité de surface.

15. Procédé selon la revendication précédente,
la matière sur les nervures de renforcement (40, 41) étant retirée pour équilibrer la roue à disque.
